**Europäisches Patentamt**

**European Patent Office**

**Office européen des brevets**

(19)

(11) Numéro de publication: **0 240 415**
**B1**

(12)                                 **FASCICULE DE BREVET EUROPEEN**

(45) Date de publication du fascicule du brevet:
22.11.90

(51) Int. Cl.⁵: **C08F 14/06**, C08F 2/18,
C08F 2/38

(21) Numéro de dépôt: **87400665.3**

(22) Date de dépôt: **25.03.87**

(54) **Procédé de préparation en microsuspension de latex d'homo- et co-polymères du chlorure de vinyle utilisables comme produits d'ensemencement.**

(30) Priorité: **03.04.86 FR 8604763**

(43) Date de publication de la demande:
**07.10.87 Bulletin 87/41**

(45) Mention de la délivrance du brevet:
**22.11.90 Bulletin 90/47**

(84) Etats contractants désignés:
**BE DE ES FR GB IT NL**

(56) Documents cités:
**DE-A- 2 033 902**
**FR-A- 1 485 547**

**CHEMICAL ABSTRACTS,**
**vol. 85, no. 6, 9 août 1976, page 4, résumé no. 33457n,**
**Columbus, Ohio, US; Yu.A. ZVEREVA et al.:**
**"Polymerization of vinyl chloride in the presence**
**of 2,6-di-tert-butyl-4-methylphenol"**

(73) Titulaire: **ATOCHEM, 4 & 8, Cours Michelet La**
**Défense 10, F-92800 Puteaux(FR)**

(72) Inventeur: **Brulet, Daniel, Mas de Crapon Communay,**
**F-69360 Saint Symphorien d'Ozon(FR)**

**Description**

La présente invention a pour objet un procédé de préparation de latex d'homo- et co-polymères du chlorure de vinyle, dont les particules ont un diamètre moyen compris entre 0,2 et 0,8 µm et renferment au moins au initiateur de polymérisation organosoluble, par polymérisation en microsuspension du ou des monomères correspondants. Les particules desdits latex renfermant la totalité de l'initiateur nécessaire à la polymérisation en microsuspension ensemencée, ladite polymérisation ne nécessite pas d'addition complémentaire d'initiateur de polymérisation.

Par polymérisation en microsuspension ou suspension fine on entend une polymérisation en présence d'initiateur(s) organosoluble(s) d'au moins un monomère dispersé par des moyens mécaniques énergiques dans un milieu aqueux contenant un émulsifiant en tant que stabilisant.

Il est connu par le brevet français n° 1.485.547 d'utiliser, pour la préparation de polymères du chlorure de vinyle par polymérisation en microsuspension ensemencée, comme produit d'ensemencement, un latex dont les particules renferment la totalité de l'initiateur nécessaire à ladite polymérisation.

Les procédés, utilisés jusqu'alors, de préparation, par polymérisation en microsuspension, d'un tel latex, présentent les inconvénients suivants :
- lors de la préparation de la dispersion du ou des monomères, qui est réalisée à température généralement comprise entre 10 et 30°C, on observe le plus souvent la formation de croûtes qui perturbent le fonctionnement des moyens mécaniques mis en oeuvre et, ce faisant, conduit à un latex dont le diamètre moyen des particules n'est pas reproductible d'une opération à l'autre,
- lors de la polymérisation du ou des monomères ainsi dispersés la quantité importante d'initiateur présent, qui peut être égale à plus de 20 fois la quantité nécessaire à la polymérisation, conduit fréquemment à de brusques élévations de température du milieu réactionnel, pouvant dépasser 10°C, et à la formation importante de croûtes.

Le procédé objet de l'invention ne présente pas les inconvénients énoncés ci-dessus.

Selon le procédé, objet de l'invention, de préparation de latex d'homo- et co-polymères du chlorure de vinyle, dont les particules ont un diamètre moyen compris entre 0,2 et 0,8 µm et renferment au moins un initiateur de polymérisation organosoluble, par polymérisation en microsuspension du ou des monomères correspondants on réalise une dispersion fine du ou des monomères dans un milieu aqueux contenant au moins un émulsifiant anionique éventuellement associé à au moins un émulsifiant non ionique, en présence de 0,004 à 0,16 %, en poids par rapport au(x) monomère(s), dudit initiateur exprimé en oxygène actif, puis on réalise une opération de polymérisation, à temperature visée $\theta_1$, sur le milieu réactionnel ainsi formé.

Selon le procédé de l'invention, avant de réaliser la dispersion du ou des monomères an ajoute du 2,6-ditertiobutylparacrésol au milieu aqueux et au cours de l'opération de polymérisation on ajoute également du 2,6-ditertiobutylparacrésol, de façon continue, au milieu réactionnel, lorsque la température $\theta_2$ du milieu réactionnel est telle que l'écart $\theta_2$-$\theta_1$ est supérieur à une valeur choisie dans l'intervalle allant de 0 à + 5°C et de préférence de 0 à + 2°C.

La demanderesse a en effet trouvé que l'addition de 2,6-ditertiobutylparacrésol au milieu aqueux avant de réaliser la dispersion du ou des monomères supprime à ce stade la formation de croûtes et que son addition au cours de l'opération de polymérisation, dans les conditions du procédé de l'invention, limite à moins de 6°C les élévations de température et réduit substantiellement à ce stade la formation de croûtes. Elle a constaté également que l'emploi, dans les mêmes conditions, d'hydroquinone ou de méthylhydroquinone, à la place du 2,6-ditertiobutylparacrésol, ne diminue que très faiblement les inconvénients énoncés ci-dessus.

Le 2,6-ditertiobutylparacrésol ajouté au milieu aqueux avant de réaliser la dispersion du ou des monomères représente généralement 0,0005 à 0,05 % en poids par rapport au(x) monomère(s).

Le 2,6-ditertiobutylparacrésol ajouté au milieu réactionnel au cours de l'opération de polymérisation représente généralement 0,0005 à 0,05 % en poids par rapport au(x) monomère(s) et est de préférence mis en oeuvre sous forme de dispersion aqueuse ou en solution dans un alcool aliphatique de bas poids moléculaire tel que, par exemple, l'alcool méthylique ou l'alcool éthylique. La teneur en 2,6-ditertiobutylparacrésol de ladite dispersion aqueuse est généralement de 0,01 à 1 % en poids. La teneur en 2,6-ditertiobutylparacrésol de ladite solution est généralement de 5 à 15 % en poids.

Par polymères du chlorure de vinyle on entend les homo- et co-polymères, ces derniers contenant au moins 50% en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et poly-carboxyliques,tels que acétate, propionate, benzoate de vinyle ;les acides insaturés mono- et poly-carboxyliques, tels que acrylique, méthacrylique, maléique, fumarique, itaconique, ainsi que leurs esters aliphatiques, cycloaliphatiques, aromatiques, leurs amides, leurs nitriles ; les halogénures d'allyl, de vinyle, de vinylidène ; les alkylvinyléthers ; les oléfines.

On peut utiliser selon le procédé de l'invention tous les initiateurs de polymérisation organosolubles susceptibles d'être mis en oeuvre pour la préparation en microsuspension des polymères du chlorure de vinyle et représentés par les générateurs de radicaux libres tels que des peroxydes organiques comme le peroxyde de lauroyle, le peroxyde d'acétylcyclohexanesulfonyle, le peroxyde d'isobutyroyle, le peroxyde de dichloracétyle, le peroxyde de trichloracétyle ; les peroxydicarbonates comme le peroxydicarbonate d'éthyle, le peroxydicarbonate d'éthyle hexyle, le peroxydicarbonate d'isopropyle, le peroxydicarbonate d'isobutyle ; le perméthoxyacétate de tertiobutyle ; le peréthoxyacétate de tertiobutyle ; le perphénoxy-2-propionate de tertiobutyle. Chaque initiateur de polymérisation générateur de radicaux libres peut être exprimé en oxygène actif. Dans le cas d'un composé peroxydé 1 molécule dudit composé peroxydé libère par décomposition 1 ion oxygène, c'est-à-dire correspond à 1 atome d'oxygène actif. Dans le cas d'un initiateur de polymérisation générateur de radicaux libres autre qu'un composé peroxydé il est admis de l'exprimer en oxygène actif en considérant également que 1 molécule dudit initiateur de polymérisation correspond à 1 atome d'oxygène actif. .

Le choix de l'initiateur organosoluble dépend de sa vitesse de décomposition à la température de réaction choisie. Ledit initiateur doit en effet être suffisamment réactif pour qu'en mettant en oeuvre 0,004 à 0,16 %, en poids par rapport au(x) monomère(s), dudit initiateur exprimé en oxygène actif on réalise la préparation du latex dans des temps compris entre 4 et 20 heures. Cependant la vitesse de décomposition de l'initiateur ne doit pas être trop élevée, de façon que la quantité d'initiateur décomposé lors de la préparation du latex ne dépasse pas la moitié de la quantité d'initiateur mis en oeuvre. Pour cela il est donc nécessaire de choisir un initiateur dont la durée de demi-vie est telle que la proportion d'initiateur détruit, lors de la préparation du latex, est comprise entre 1 et 50 % en poids de la totalité de l'initiateur mis en oeuvre.

Dans le cas où l'on emploie plusieurs initiateurs organosolubles on a avantage à les choisir de réactivité différente : les initiateurs les plus réactifs agissent principalement au cours de la préparation du latex selon l'invention, alors que les initiateurs les moins réactifs réagiront principalement au cours de la polymérisation en microsuspension ensemencée réalisée pour la préparation de polymères du chlorure de vinyle en présence dudit latex utilisé comme produit d'ensemencement.

La quantité d'eau mise en oeuvre selon le procédé de l'invention est telle que la teneur initiale en monomère(s) du milieu réactionnel est généralement comprise entre 30 et 50 % en poids.

Les émulsifiants anioniques sont de préférence représentés par les savons d'acides gras, les alkylsulfates, les alkylsulfonates, les alkylarylsulfonates, les vinylsulfonates, les allylsulfonates, les alkylsulfosuccinates, les alkylphosphates alcalins et les émulsifiants non ioniques par les polycondensats d'oxyde d'éthylène ou de propylène sur divers composés organiques hydroxylés. Il peut être avantageux d'ajouter également dudit ou desdits émulsifiants au milieu réactionnel au cours de la polymérisation. La quantité d'émulsifiant est généralement comprise entre 0,3 et 4 % en poids par rapport au(x) monomère(s).

La dispersion du ou des monomères dans le milieu aqueux est réalisée à température généralement comprise entre 10 et 30°C à l'aide d'un moyen mécanique énergique tel que, par exemple, moulin à colloïdes, pompe rapide, agitateur à vibrations, appareil à ultrasons.

L'opération de polymérisation est réalisée en portant, sous pression autogène et agitation modérée, la dispersion obtenue à la température de polymérisation visée $\theta_1$, généralement comprise entre 30 et 65°C, puis en ajoutant le 2,6-ditertiobutylparacrésol, de façon continue, au milieu réactionnel, lorsque la température $\theta_2$ du milieu réactionnel est telle que l'écart $\theta_2-\theta_1$ est supérieur à une valeur choisie dans l'intervalle allant de 0 à + 5°C et de préférence de 0 à + 2°C. Après la chute de pression la réaction est arrêtée et le ou les monomères non transformés sont dégazés.

On donne ci-après, à titre indicatif et non limitatif, plusieurs exemples destinés à illustrer l'invention.

Les exemples 1,3,4,5 et 6 sont donnés à titre comparatif.

L'exemple 2 est selon l'invention.

## EXEMPLE 1

On mélange :
- 40 kg de chlorure de vinyle,
- 0,6 kg de peroxyde de lauroyle,
- 4 kg d'une solution aqueuse à 10 % en poids de dodécylbenzène sulfonate de sodium
- eau en quantité telle que la teneur du mélange en chlorure de vinyle soit de 43 % en poids.

On réalise une dispersion fine du chlorure de vinyle dans le milieu aqueux, puis on introduit ladite dispersion dans un autoclave de 120 litres de capacité muni d'une double enveloppe et d'un agitateur à ancre. On porte le milieu réactionnel ainsi formé à la température de polymérisation visée $\theta_1$ de 52°C sous pression autogène, la vitesse de l'agitateur étant de 50 tr/min.

Après la chute de pression, c'est-à-dire après 9 heures, on dégaze le chlorure de vinyle qui n'a pas réagi. On obtient un latex dont la teneur pondérale en matière sèche est de 40 % en poids et dont les particules ont un diamètre moyen de 0,4 µm et renferment 1,4 %, en poids par rapport au polymère, de peroxyde de lauroyle.

## EXEMPLE 2

On opère comme dans l'exemple 1 mais avant de réaliser la dispersion fine du chlorure de vinyle dans le milieu aqueux on ajoute du 2,6-ditertiobutylparacrésol (DBPC) audit milieu et au cours de la polymérisation on ajoute également du 2,6-ditertiobutylparacrésol, de façon continue, au milieu réactionnel, lorsque la température $\theta_2$ du milieu réactionnel est supérieure à 53°C. Le 2,6-ditertiobutylparacrésol ajouté au milieu réactionnel au cours de la polymérisation est mis en oeuvre sous forme d'un dispersion dans 2 litres d'eau.

EXEMPLES 3 et 4

On opère comme dans l'exemple 2 mais en remplaçant le 2,6-ditertiobutylparacrésol par de l'hydroquinone (HQ).

EXEMPLES 5 et 6

On opère comme dans l'exemple 2 mais en remplaçant le 2,6-ditertiobutylparacrésol par de la méthylhydroquinone (MEHQ).

Le tableau 1 ci-après indique pour chaque exemple :
- la nature de l'additif (DBPC, HQ ou MEHQ) éventuellement mis en oeuvre,
- la quantité d'additif ajouté avant de réaliser la dispersion,
- la quantité d'additif ajouté au cours de la polymérisation,
- la quantité de croûtes formées lors de la réalisation de la dispersion,
- la quantité de croûtes formées lors de la polymérisation,
- l'écart maximal de température $\theta_2-\theta_1$ atteint au cours de la polymérisation.

## TABLEAU I

| | EXEMPLES | | | | | |
|---|---|---|---|---|---|---|
| | 1 | 2 | 3 | 4 | 5 | 6 |
| Nature de l'additif | — | DBPC | HQ | HQ | MEHQ | MEHQ |
| Quantité d'additif ajouté : | | | | | | |
| — avant de réaliser la dispersion (g) | — | 12 | 12 | 10 | 12 | 12 |
| — au cours de la polymérisation (g) | — | 14 | 12 | 18 | 12 | 14 |
| Quantité de croûtes formées : | | | | | | |
| — lors de la réalisation de la dispersion (g) | 220 | 3 | 205 | 225 | 225 | 205 |
| — lors de la polymérisation (kg) | 2,1 | 0,5 | 2,3 | 3,0 | 1,8 | 2,0 |
| Ecart maximal $\theta_2-\theta_1$ (°C) | + 8 | + 2 | + 8 | + 8 | + 8 | + 7 |

**Revendications**

1. Procédé de préparation de latex d'homo- et co-polymères du chlorure de vinyle, dont les particules ont un diamètre moyen compris entre 0,2 et 0,8 μm et renferment au moins un initiateur de polymérisation organosoluble, par polymérisation en microsuspension du ou des monomères correspondants selon lequel on réalise une dispersion fine du ou des monomères dans un milieu aqueux contenant au moins un émulsifiant anionique éventuellement associé à au moins un émulsifiant non ionique, en présence de 0,004 à 0,16 %, en poids par rapport au(x) monomère(s), dudit initiateur exprimé en oxygène actif, puis on réalise une opération de polymérisation, à température visée $\theta_1$, sur le milieu réactionnel ainsi formé, caractérisé par le fait qu'avant de réaliser la dispersion du ou des monomères on ajoute du 2,6-ditertiobutylparacrésol au milieu aqueux et qu'au cours de l'opération de polymérisation on ajoute également du 2,6-ditertiobutylparacrésol, de façon continue, au milieu réactionnel, lorsque la température $\theta_2$ du milieu réactionnel est telle que l'écart $\theta_2$-$\theta_1$ est supérieur à une valeur choisie dans l'intervalle allant de 0 à + 5°C et de préférence de 0 à + 2°C.

2. Procédé selon la revendication 1, caractérisé par le fait que le 2,6-ditertiobutylparacrésol ajouté au milieu aqueux avant de réaliser la dispersion du ou des monomères représente 0,0005 à 0,05 % en poids par rapport au(x) monomère(s).

3. Procédé selon l'une quelconque des revendications 1 et 2, caractérisé par le fait que le 2,6-ditertiobutylparacrésol ajouté au milieu réactionnel au cours de l'opération de polymérisation représente 0,0005 à 0,05 % en poids par rapport au(x) monomère(s).

4. Procédé selon l'une quelconque des revendications 1 à 3, caractérisé par le fait que le 2,6-ditertiobutylparacrésol ajouté au milieu réactionnel au cours de l'opération de polymérisation est mis en oeuvre sous forme de dispersion aqueuse.

5. Procédé selon la revendication 4, caractérisé par le fait que la teneur en 2,6-ditertiobutylparacrésol de ladite dispersion aqueuse est de 0,01 à 1 % en poids.

6. Procédé selon l'une quelconque des revendications 1 à 3, caractérisé par le fait que le 2,6-ditertiobutylparacrésol ajouté au milieu réactionnel au cours de l'opération de polymérisation est mis en oeuvre en solution dans un alcool aliphatique de bas poids moléculaire.

7. Procédé selon la revendication 6, caractérisé par le fait que ledit alcool est choisi dans le groupe formé par l'alcool méthylique et l'alcool éthylique.

8. Procédé selon l'une quelconque des revendications 6 et 7, caractérisé par le fait que la teneur en 2,6-ditertiobutylparacrésol de ladite solution est de 5 à 15 % en poids.

9. Procédé selon l'une quelconque des revendications 1 à 8, caractérisé par le fait que la teneur initiale en monomère(s) du milieu réactionnel est comprise entre 30 et 50 % en poids.

**Patentansprüche**

1. Verfahren zur Herstellung von Latices von Vinylchlorid-Homo- und -Copolymeren, deren Teilchen einen mittleren Durchmesser im Bereich von 0,2 bis 0,8 μm aufweisen und mindestens einen organolöslichen Polymerisationsinitiator enthalten, mittels Polymerisation in Mikrosuspension des oder der entsprechenden Monomeren, bei dem eine feine Dispersion des oder der Monomeren in einem wäßrigen Medium hergestellt wird, das mindestens einen anionischen Emulgator, gegebenenfalls kombiniert mit mindestens einem nicht ionischen Emulgator enthält, in Gegenwart von 0,004 bis 0,16 Gew.-%, bezogen auf das/die Monomere(n) des genannten Initiators ausgedrückt als aktiver Sauerstoff, und dann in dem so erhaltenen Reaktionsmedium eine Polymerisation bei der in Betracht gezogenen Temperatur $\theta_1$ durchgeführt wird, dadurch gekennzeichnet, daß man vor der Herstellung der Dispersion des oder der Monomeren dem wäßrigen Medium 2,6-Ditert.butylparacresol zusetzt und im Verlauf des Polymerisationsvorganges ebenfalls dem Reaktionsmedium 2,6-Ditert.butylparacresol kontinuierlich zusetzt, sobald die Temperatur $\theta_2$ des Reaktionsmediums so ist, daß der Abstand $\theta_2$-$\theta_1$ über einem Wert, ausgewählt im Intervall von 0 bis +5°C, vorzugsweise von 0 bis +2°C), liegt.

2. Verfahren nach Anspruch 1, dadurch gekennzeichnet, daß das dem wäßrigen Medium vor der Herstellung der Dispersion des oder der Monomeren zugesetzte 2,6-Ditert.butylparacresol 0,0005 bis 0,05 Gew.-%, bezogen auf das/die Monomere(n) ausmacht.

3. Verfahren nach einem der Ansprüche 1 und 2, dadurch gekennzeichnet, daß das dem Reaktionsmedium im Verlauf des Polymerisationsvorganges zugesetzte 2,6-Ditert.butylparacresol 0,0005 bis 0,05 Gew.-%, bezogen auf das/die Monomere(n), ausmacht.

4. Verfahren nach einem der Ansprüche 1 bis 3, dadurch gekennzeichnet, daß das dem Reaktionsmedium im Verlauf des Polymerisationsvorganges zugegebene 2,6-Ditert.butylparacresol in Form einer wäßrigen Dispersion eingesetzt wird.

5. Verfahren nach Anspruch 4, dadurch gekennzeichnet, daß der Gehalt der wäßrigen Dispersion an 2,6-Ditert.butylparacresol 0,01 bis 1 Gew.-% ausmacht.

6. Verfahren nach einem der Ansprüche 1 bis 3, dadurch gekennzeichnet, daß das dem Reaktionsmedium im Verlauf des Polymerisationsvorganges zugegebene 2,6-Ditert.butylparacresol als Lösung in einem niedrig-molekularen aliphatischen Alkohol eingesetzt wird.

7. Verfahren nach Anspruch 6, dadurch gekennzeichnet, daß der Alkohol aus der Gruppe bestehend aus Methylalkohol und Ethylalkohol ausgewählt wird.

8. Verfahren nach einem der Ansprüche 6 und 7, dadurch gekennzeichnet, daß der Gehalt der Lösung an 2,6-Ditert.butylparacresol 5 bis 15 Gew.-% ausmacht.

9. Verfahren nach einem der Ansprüche 1 bis 8, dadurch gekennzeichnet, daß der Anfangsgehalt des Reaktionsmediums an dem oder den Monomeren 30 bis 50 Gew.-% ausmacht.

**Claims**

1. Process for the preparation of vinyl chloride homo- and copolymer latices in which the particles have a mean diameter of between 0.2 and 0.8 µm and contain at least one organosoluble polymerization initiator, by microsuspension polymerization of the corresponding monomer(a), according to which a fine dispersion of the monomer(s) is produced in an aqueous medium containing at least one anionic emulsifier optionally coupled with at least one nonionic emulsifier, in the presence of 0.004 to 0.16%, by weight relative to the monomer(s), of the said initiator, expressed as active oxygen, and a polymerization operation is then carried out at a target temperature $\theta_1$, of the reaction mixture thus formed, characterized in that before the dispersion of the monomer(s) is produced 2,6-di-tert-butyl-para-cresol is added to the aqueous medium and that 2,6-di-tert-butyl-para-cresol is also added continuously to the reaction mixture during the polymerization operation when the temperature $\theta_2$ of the reaction mixture is such that the difference $\theta_2-\theta_1$ is greater than a value chosen in the range extending from 0 to +5°C and preferably from 0 to +2°C.

2. Process according to claim 1, characterized in that the 2,6-di-tert-butyl-para-cresol added to the aqueous medium before the dispersion of the monomer(s) is produced represents 0.0005 to 0.05% by weight relative to the monomer(s).

3. Process according to either of claims 1 and 2, characterized in that the 2,6-di-tert-butyl-para-cresol added to the reaction mixture during the polymerization operation represents 0.0005 to 0.05% by weight relative to the monomer(s).

4. Process according to any one of claims 1 to 3, characterized in that the 2,6-di-tert-butyl-para-cresol added to the reaction mixture during the polymerization operation is introduced in the form of an aqueous dispersion.

5. Process according to claim 4, characterized in that the 2,6-di-tert-butyl-para-cresol content of the said aqueous dispersion is from 0.01 to 1% by weight.

6. Process according to any one of claims 1 to 3, characterized in that the 2,6-di-tert-butyl-para-cresol added to the reaction mixture during the polymerization operation is introduced in solution in an aliphatic alcohol of low molecular weight.

7. Process according to claim 6, characterized in that the said alcohol is chosen from the group consisting of methyl alcohol and ethyl alcohol.

8. Process according to either of claims 6 and 7, characterized in that the 2,6-di-tert-butyl-para-cresol content of the said solution is from 5 to 15% by weight.

9. Process according to any one of claims 1 to 8, characterized in that the initial content of monomer(s) in the reaction mixture is between 30 and 50% by weight.